# EUROPEAN PATENT SPECIFICATION

(11) **EP 0 785 320 B1**
(45) Date of publication and mention of the grant of the patent: **18.09.2002**
(21) Application number: 97104746.9
(22) Date of filing: 11.01.1996
(51) Int. Cl.: E05B 1/00, E05B 3/02

(54) **Curved Handle and Mounting Means therefor**
Gebogener Handgriff sowie Vorrichtung zu deren Anbringung
Poignée courbée et ses moyens de support

(30) Priority: 18.01.1995 DE 29500691 U
(43) Date of publication of application: 23.07.1997
(62) Divisional of application: 96900314.4
(73) Proprietor: HOPPE AG, D-35260 Stadtallendorf (DE)
(72) Inventor: Reitz, Reinhold, 34628 Merzhausen (DE); Ochs, Günter, 35260 Stadtallendorf (DE)
(74) Representative: Olbricht, Karl Heinrich, Dipl.-Phys.

(56) References cited:
- EP-A- 0 563 568
- WO-A-93/10322
- DE-A- 2 753 343
- DE-A- 4 220 487
- DE-B- 1 039 880
- DE-U- 9 205 735
- FR-A- 2 612 577
- FR-A- 2 616 832
- FR-A- 2 680 551
- GB-A- 2 203 641
- US-A- 4 912 809

## Description

The present invention relates to a curved handle according to the preamble of claim 1 and to mounting means according to the preamble of claim 11, for mounting at least one handle end to extend outwardly from a contact face of a door, a window, a drawer or the like.

Means of this type are required for mounting curved handles provided with hollow ends on a contact face of a door, a window, a drawer of the like, fixing being generally achieved by means of connecting parts which are secured relative to one another in a hole by means of a screw. It is known to mount curved handles in this way, for example on house doors; normal ironmongery is generally fastened to the interior of the door. If curved handles are fastened on one side from the exterior, coverings are generally required at the interior of the door, for example a blind round anchor plate or covering cap, to make the otherwise visible screw fastener as unnoticeable as possible. When arranged on a tubular frame, it is important neither to significantly influence its strength nor to create cold bridges.

A mounting device for curved handles or door pulls as disclosed in US-A-4 912 809 includes in one handle's ends blind holes into which anchor bolts are screwed. Each anchor bolt has two conical portions for receiving setscrews from the leg side of the other handle. Since the device is designed for conventional fixing, the holding forces act directly onto the door face whereby during prolonged use, deformations and loosening are inevitable. The mode of attachment requires bolting through the spaced door walls which, therefore, may suffer indenting.

FR-A-2 612 577 discloses as closest prior art a handle fixing device comprising a two-part tensioning bolt which passes through a hollow door frame and is threadedly engaged by base rings as well as by securing nut means for attaching curved handles on either side of a door.

The adjustment of nut tightening, however, requires particular skill since an in-between screw connection must first be tuned to the precise door width of the door frame in order that then bolt-and-nut joints could be screwed for exact fit on either door side without play. Since it is much easier to simply apply large force and strain than to do cumbersome vernier work, there is quite some risk that the door frame would be squeezed and deformed on both sides.

The invention aims at simplifying and accelerating the fastening of curved handles on wooden or tubular frame doors. It is an object of the invention to provide improved mounting means for unilateral fixation of a curved handle to a contact face of a door, window, drawer or the like. More specifically, anchorage is to take place quickly and reliably without covering elements being required on the interior of the door, window, drawer, etc.and without deteriorating such opposite face. It should also easily be possible to provide an axially firm but rotatable connection to a door handle, without any need for working the interior or opposite face of the door, window, drawer, etc.

Main features of the invention are defined by claims 1 and 11. Claims 2 to 10 and claim 12 relate to further embodiments.

In a curved handle comprising mounting means for mounting at least one end of the handle to extend outwardly from a contact face of a door, a window, a drawer or the like, the handle mounting means including a fastener having a head and a threaded shaft, and further including a base member and a securing member, the base member having a central through-hole for passage of the threaded shaft of the fastener and further having a base flange, whereby when mounted in use said base flange rests on the respective contact face whilst the threaded shaft of said fastener extends from said through-hole through an aperture in the contact face so as to be received in threaded engagement with the securing member, a corresponding portion of said securing member having been introduced from the other side of the door, window, drawer or the like through an opposed aperture, thereby securing said base member on said contact face such that the curved handle may then be mounted thereon by connection to said base member, the invention provides - according to the characterizing part of claim 1 - that the at least one end of the curved handle is hollow so as to receive therein the proximate end of a tubular support member, said tubular support member being connectable to the base member in order to support the handle on the base flange wherefor said tubular support member has an outwardly extending collar abutting the end of the hollow handle and receiving said base flange, the handle thus being supported on the base member through abutment of the collar on the base flange.

A mounting set of this type consists of few components which are inexpensive to produce and can be arranged exactly in a short spell of time. It is important for the guide member to provide the support on a contact face by the base flange so the curved handle would not directly be pressed onto the contact face; thus damage to the latter is prevented. Advantageously, anchorage is effected via the base flange on the contact face behind or beneath which the fixing parts proper are secured by the fastener which passes through the base member. The tubular support member is preferably held detachably thereon and, in turn, is preferably welded to the curved handle end in order to absorb the forces and moments occurring during use of the handle.

According to claim 2, a head is integrally connected to the base flange on the supporting body side, the head being provided with an external thread for holding a cap nut which, according to claim 3, is overlapped by the support member that itself Is overlapped by the hollow end to which it is connectable either detachably or rigidly, e.g. by welding. The head and cap nut can be designed integrally so as to simplify production and storage. It is noted that the cap nut acts as a counter part.

An important development according to claim 4 includes a tube which is screwable onto a shank that issues from the base flange of the base member, the tube having preferably an external broad woodwork thread for fixing to a woden door, window, drawer or the like. This is very advantageous for mounting the curved handle on a softwood support.

Fixing is particular secure if, according to claim 5, the head and/or the cap nut has, at an axial distance from the base flange, a peripheral V-shaped groove in which a setscrew is radially engageable for fixing both the hollow end and the support member, the head and/or the cap nut having a recess on the supporting body side and having tool application faces such as parallel flats of given wrench width. This allows rapid release of the connection, if necessary, e.g. to exchange or adjust a curved handle. A tool may be used for holding whilst the fastener is tightened by a screwdriver to secure the parts. It is noted that although DE-U-9 205 735 discloses the use of a self-tapping screw whose flanged head has a contour and function similar to the cap nut of the present invention, this prior art shows no hollow nut component nor any intermediate body such as the tubular support member defined hereinabove.

In the design according to claim 6, a supporting ring provided with a flange Is screwable onto the base member which, by claim 7, is insertable through an inlet aperture in a multi-chamber profile until the base flange rests on an internal frame provided with the aperture, and is fixable by screwing the supporting ring on until it contacts the multi-chamber profile, in particular an external tubular frame next to the inlet aperture. This method of fastening prevents cold bridges in the interior of the multi-chamber profile to which the base member can be rigidly attached. Again, this is an advance over the prior art where FR-A-2 612 577 merely deals with a single-chamber profile which lacks any reinforcement or interposed frame and, therefore, any in-between support for the base member. By contrast, the invention permits bearing support in such a way that the outer walls of a hollow door (or window) frame will be protected against squeezing and deformation.

According to claim 8, a further development of the invention is characterized in that a polygonal pin includes an axial threaded aperture for fixation by means of the fastener and is adapted to be connected to a door handle and to be introduced as securing member into the aperture opposite the aperture of the contact face or the inlet aperture in the multi-chamber profile, respectively. This can be arranged without difficulty on the interior of the door, the connection to the components coming from the exterior being performed in a simple manner by the tensioning fastener.

If an inner door handle is to be provided, such is - according to claim 9 - attachable to a tubular frame by positive connection of the polygonal pin thereto in an axially firm but rotatable manner, with application of a contact plate bordered by the door handle that rests on the tubular frame preferably due to that axially firm/rotatable fixing. For example, a transverse pin may be driven through the handle neck into one of several adjusting apertures of the polygonal pin. The latter, being secured by the fastener, is according to claim 10 adapted to penetrate part of a lock inserted into a lock recess of the door whose latch is also entrained in the conventional manner by actuation of a pivotable door handle.

Independent claim 11 relates to mounting means for mounting the hollow ends of a curved handle to a contact face having an aperture, consisting of a base member having a base flange and being connectable to a securing member by a screw extending in use through the aperture, and further of a tubular supporting member adapted for mounting onto the base member and having a collar forming an outward step in the tubular wall thereof such that when mounted in use, the base flange is received therein to abut said collar. The invention provides that a cap nut is overlappingly seated in use between the base member and the tubular supporting member, with the cap nut and a head of the base member having wrench faces for screwing them onto each other, the cap nut further including a peripheral groove permitting the handle to be attached for use by means of a setscrew at the associated hollow end. In accordance with claim 12, the base member is in use secured externally by a flanged ring for fixing a door handle, e.g. to a multi-chamber profile, the securing member being a polygonal pin non-rotatably held in the door handle. It is realized that the special combinations thus defined offer particular mounting advantages.

Further features will emerge from the wording of the claims and further details and advantages from the following description of embodiments given with reference to the drawings wherein
- Fig. 1: is an exploded view of components of a screw fastener for fixing on a door with an internal handle,
- Figs. 1a and 1b: are axial sections through components of the mounting set according to Fig. 1 at the beginning and at the end of mounting, respectively,
- Fig. 2: is an exploded sectional view of another embodiment of a mounting set, a multi-chamber profile and a door handle connection, and
- Figs. 2a and 2b: are sectional views of mounting set components according to Fig. 2 during and after mounting, respectively.

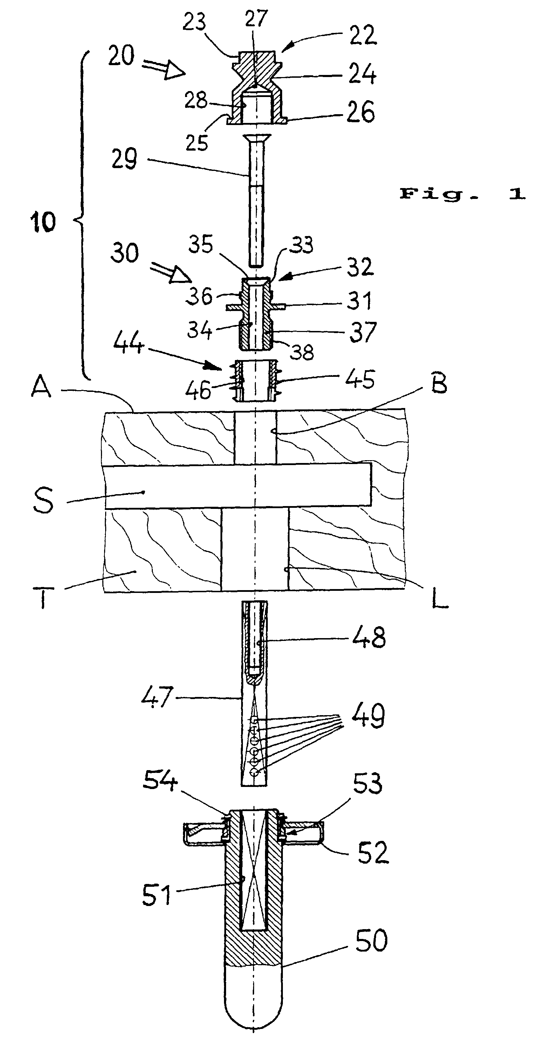

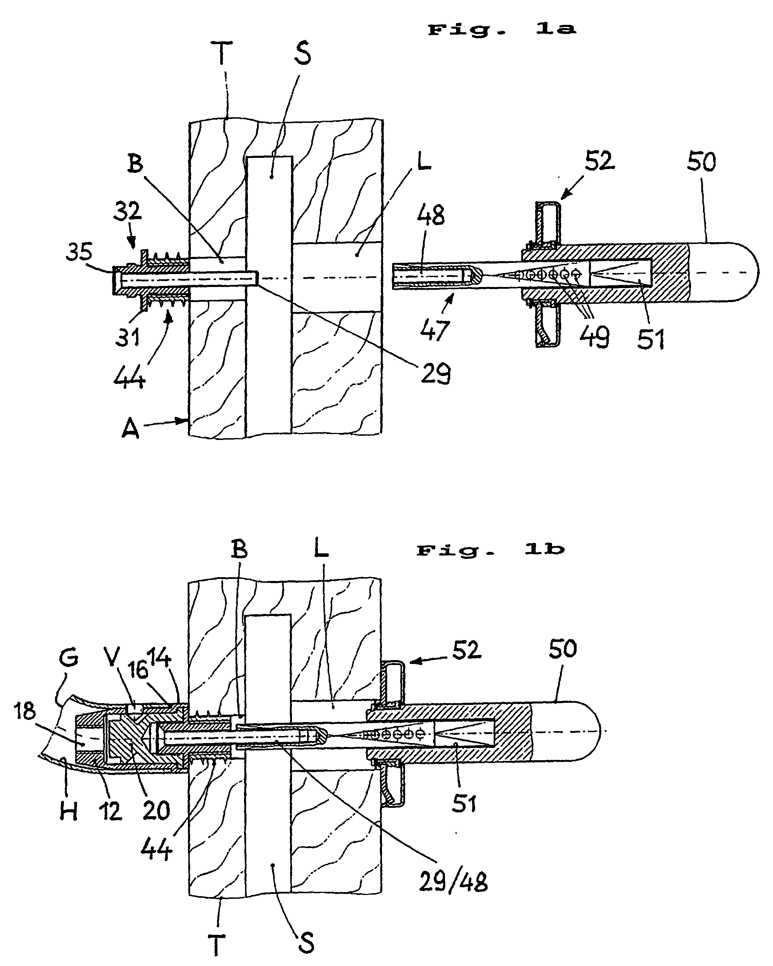

Fig. 1 shows a cap nut 20 with a head 22 having two parallel wrench faces 23 and a peripheral recess in the form of a V-shaped groove 24. A shoulder 25 is provided on a supporting flange 26 axially remote from the head 22. A blind aperture 27 directed from the flange 26 to the head 22 has an internal thread 28.

A further component of the mounting set shown in Fig. 1 is a fastener, specifically a flat head screw 29 which can be introduced into a central aperture 34 of a base member 30 and whose head 32 rests on a recess 35 therein. This base member head 32 has two parallel wrench faces 33. A base flange 31 joins an external thread 36 of base membr 30 and continues with a shank 37 bearing an external thread 38. A broad-threaded tube 44 having a broad outer thread 45 and an internal thread 46 can be screwed on to the external thread 38 of the shank 37. Thereupon the screw 29 can be introduced into the head 32 and the assembly thus formed can be screwed into the orifice B (Fig. 1a).

A square pin 47 having an axial threaded aperture 48 to be screwed to the screw 29 can be introduced from the opposite side of a door panel T through an aperture L It also has adjusting apertures 49 which, after insertion of the free end of the square pin into a square aperture 51 of a door handle 50, allow the latter to be fixed (Fig. 1b) at the necessary axial depth by a transverse pin (not shown).

After application of the cap nut 20, a tubular support member 12 which includes an axial threaded aperture 18 is fixed externally on the door T with a transverse setscrew V together with a hollow end H of the curved handle G (Fig. 1b). It will be seen that the square pin 47 not only passes through the aperture L but also through a lock recess S which usually receives a lock (not shown here), an inner part of which is positively penetrated by the square pin 47. A unit comprising a base plate and cover 52, which is fixed on the door handle 50 by a border or flared flange 54 together with guide members 53, is screwed on the door inside in the conventional manner and is shielded by the cover 52. - Fig. 1b shows further a collar 14 of tubular support member 12 having a shoulder 16 for abutment of the hollow handle end H.

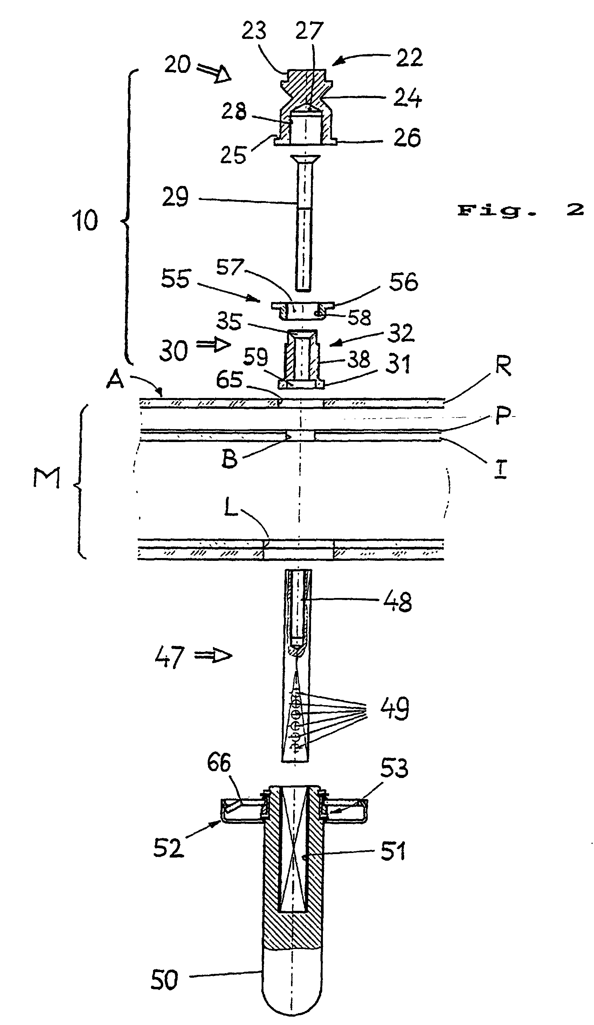

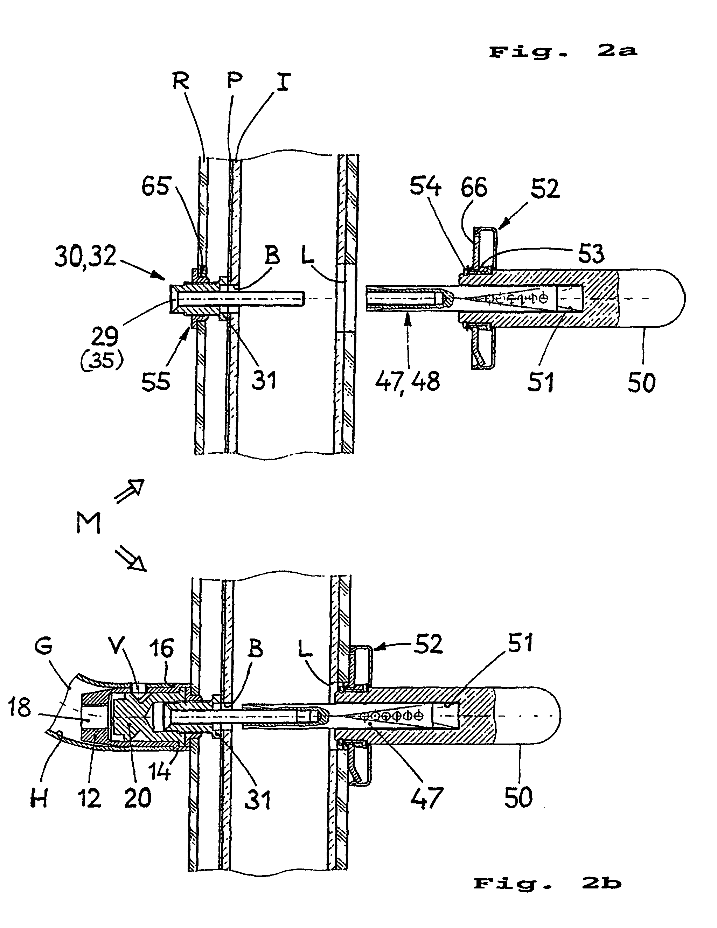

The embodiment according to Fig. 2 resembles that of Fig. 1, but a multi-chamber profile M is provided instead of a solid wood frame. The components 20, 29, 55, 30 are fastened externally as described, the base member 30 being introduced through an orifice 65 until the base flange 31 rests on the contact face A of a reinforcement P. A supporting ring 55 having an upper flange 56 fixes the base member 30, whereupon the screw 29 is inserted and screwed to the square pin 47 on the threaded aperture 48 (Fig. 2a). At an appropriate depth of screwing, the door handle 50 is fixed with its square aperture 51 on the adjusting apertures of the square pin 47 by a transverse pin (not shown), so the unit comprising a contact plate 66 and shield 52 can be screwed on to rest snugly on the outer tubular frame R next to the aperture L.

Once the cap nut 20 has been screwed externally on to the head 32 and the tubular support member 12 has been slipped on, the latter is in its turn fixed thereon, together with the hollow end H of the curved handle G, by means of transverse setscrew V as seen in Fig. 2b where, again, outward step 14/16 is shown with end H abutting thereat

The invention is not restricted to the illustrated designs and embodiments. It is important that single-sided curved handle fastening is provided, in particular, on doors T or multi-chamber profiles M without covering elements. The holding of the tubular support member 12 is effected by head 32 of base member 30, preferably with interposition of a cap nut 20. The hollow end H of the curved handle G rests directly on base flange 31 but not on the contact face A itself, so no marring will occur on the surface of door or frame during use of the handle. For fastening, particularly on soft wood, tube 44 offers additional security of connection. With multi-chamber profiles M, an internal frame I or a reinforcement P acts as a support for the screw fastener which is therefore also secured deep inside, specifically without cold bridges. Partial pre-assembly is possible in all cases, and when appropriately mounted, the external visible faces will not be altered or damaged. The mounting system according to the invention is also suitable for connection to an inner door handle, in which case no covering elements are required except for the shield 52 (for its conventional contact plate 66).

Essential advantages of the invention reside in the fact that, for mounting the hollow ends H of a curved handle G in an aperture B on a contact face A, a base member 30 for a fastener 29 has a base flange 31 which can be connected to a tubular support member 12 that can advantageously be welded into the hollow end H. Onto a head 32 of base member 30, a cap nut 20 can be screwed that comprises a peripheral groove 24 for fixing the hollow end H by means of a setscrew V and, like the head 32, also includes wrench faces (33 or 23). A door handle 50 can be fixed, for example, on a multi-chamber profile M by the means of a polygonal pin 47, the base member 30 being secured externally by a flanged ring 55.

### List of Reference Symbols

- A: contact face
- B: aperture
- G: curved handle
- H: hollow end
- I: internal frame
- L: opposite aperture
- M: multi-chamber profile
- P: reinforcement
- R: tubular frame
- S: lock recess
- T: door [wooden frame]
- V: (transverse) setscrew

- 10: mounting set
- 12: supporting member
- 14: collar
- 16: shoulder
- 18: aperture
- 20: cap nut
- 22: head
- 23: wrench faces
- 24: V-shaped groove
- 25: shoulder
- 26: supporting flange
- 27: blind aperture
- 28: internal thread
- 29: screw
- 30: base member
- 31: base flange
- 32: head
- 33: wrench faces
- 34: aperture = through hole
- 35: recess
- 36: external thread
- 37: shank
- 38: external thread
- 44: broad-threaded tube
- 45: broad outer thread
- 46: internal thread
- 47: square pin
- 48: axial threaded aperture
- 49: adjusting aperture
- 50: door handle
- 51: square aperture
- 52: shield / cover
- 53: guide (members)
- 54: border / flared flange
- 55: supporting ring
- 56: flange
- 57: orifice
- 58: internal thread
- 59: recess
- 65: inlet operture
- 66: contact plate

## Claims

1. A curved handle comprising mounting means (10) for mounting at least one end (H) of the handle (G) to extend outwardly from a contact face (A) of a door (T), a window, a drawer or the like, the handle mounting means including a fastener (29) with a head and a threaded shaft, and further including a base member (30) and a securing member (47), the base member (30) having a central through-hole (34) for passage of the threaded shaft of the fastener (29) and having a base flange (31), whereby when mounted in use said base flange (31) rests on the respective contact face (A) whilst the threaded shaft extends from said through-hole (34) through an aperture (B) in the contact face (A) so as to be received in threaded engagement with the securing member (47), a corresponding portion of said securing member (47) having been introduced from the other side of said door (T), window, drawer or the like through an opposed aperture (L), thereby securing said base member (30) on said contact face (A) such that the curved handle (G) may then be mounted thereon by connection to said base member (30), **characterized in that** the at least one end of the curved handle (G) is hollow so as to receive therein the proximate end of a tubular support member (12), said tubular support member (12) being connectable to the base member (30) in order to support the handle (G) on the base flange (31) wherefor said tubular support member (12) has an outwardly extending collar (14) abutting the end (H) of the hollow handle (G) and receiving said base flange (31), the handle (G) thus being supported on the base member (30) through abutment of the collar (14) on the base flange (31).

2. Handle according to claim 1, wherein a head (32) is integrally connected to the base flange (31) on the supporting body side and comprises an external thread (36) for holding a cap nut (20).

3. Handle according to any one of claims 1 to 2, wherein the support member (12) overlaps the cap nut (20) and is itself overlapped by the hollow end (H) to which it is connectable either detachably or rigidly, e.g. by welding.

4. Handle according to any one of claims 1 to 3, **wherein** a tube (44) is screwable onto a shank (37) that issues from the base flange (31) of the base member (30), the tube (44) having preferably an external broad woodwork thread (45) for fixing to a wooden door (T), window, drawer or the like.

5. Handle according to any one of claims 2 to 4, **wherein** the head (32) and/or the cap nut (20) has, at an axial distance from the base flange (31), a peripheral V-shaped groove (24) in which a setscrew (V) is radially engageable for fixing both the hollow end (H) and the support member (12), and **wherein** the head (32) and/or the cap nut (20) has a recess (35) on the supporting body side and has tool application faces such as parallel flats (33 or 23) of given wrench width.

6. Handle according to any one of claims 1 to 5, **wherein** a supporting ring (55) provided with a flange (56) is screwable onto the base member (30).

7. Hanlde according to claim 6, **wherein** the base member (30) is insertable through an inlet aperture (65) in a multi-chamber profile (M) until the base flange (31) rests on an internal frame (I) provided with the aperture (B) and is fixable by screwing the supporting ring (55) on until it contacts the multi-chamber profile (M), in particular an external tubular frame (R) next to the inlet aperture (65).

8. Handle according to any one of claims 1 to 7, **wherein** a polygonal pin (47) includes a threaded axial aperture (48) for fixation by means of the fastener (29) and is adapted to be connected to a door handle (50) and to be introduced as securing member into the aperture (L) opposite the aperture (B) of the contact faxe (A) or the inlet aperture (65) in the multi-chamber profile (M), respectively.

9. Handle according to any one of claims 6 to 8, **wherein** by positive connection of the polygonal pin (47) to a door handle (50), the latter is attachable to a tubular frame (R) in an axially firm but rotatable manner with application of a contact plate (66) bordered by it.

10. Handle according to claim 8 or claim 9, **wherein** the polygonal pin (47) secured by the fastener (29) penetrates part of a lock inserted in a lock recess (S) of the door (T).

11. Mounting means for mounting the hollow ends (H) of a curved handle (G) to a contact face (A) presenting an aperture (65; B), consisting of a base member (30) and a securing member (47), said base member (30) having a base flange (31) and being connectable to the securing member (47) by a screw (29) extending in use through the aperture (65; B), and further consisting of a tubular supporting member (12) adapted for mounting onto the base member (30) and having a collar (14) forming an outward step in the tubular wall thereof, such that when mounted in use, the base flange (31) is received therein to abut said collar (14), **characterized in that** a cap nut (20) is overlappingly seated in use between the base member (30) and the tubular supporting member (12), whereby the cap nut (20) and a head (32) of the base member (30) are each threated for mutual engagement and have wrench faces (23; 33) for use in screwing them together, the cap nut (20) further including a circumferential groove (24) permitting the handle (G) to be attached in use by means of a setscrew (V) at the associated hollow end (H).

12. Mounting means according to claim 11, **wherein** in use, the base member (30) is in use secured externally by a flanged ring (55) for fixing a door handle (50), e.g. to a multi-chamber profile (M), the securing member being a polygonal pin (47) non-rotatably held in the door handle (50).

## Patentansprüche

1. Bügelgriff mit Montagemitteln (10) zum Befestigen wenigstens eines Endes (H) des Griffs (G), so daß er von einer Anschlagfläche (A) einer Tür (T), eines Fensters, einer Schublade o.dgl. nach außen absteht, wobei als Montagemittel (10) eine Schraube (29) mit Kopf und Gewindeschaft, ferner einen Führungskörper (30)sowie ein Sicherungselement (47) vorhanden sind, wobei der Führungskörper (30) ein mittiges Durchgangsloch (34) zur Aufnahme des Gewindeschafts der Schraube (29) und einen Fußflansch (31) aufweist, so daß dieser im montierten Zustand an der Anschlagfläche (A) anliegt, während der Gewindeschaft das Durchgangsloch (34) und eine Bohrung (B) in der Anschlagfläche (A) durchragt und in Schraubverbindung mit dem Sicherungselement (47) steht, wovon ein zugeordneter Teil von der anderen Seite der Tür (T), des Fensters, der Schublade o.dgl. her in eine entgegengesetzte Bohrung (L) eingebracht ist, wodurch der Fußflansch (30) auf der Anschlagfläche (A) derart gesichert ist, daß der Bügelgriff (G) sodann darauf durch Verbindung mit dem Führungskörper (30) montierbar ist, **dadurch gekennzeichnet, daß** das wenigstens eine Ende (H) des Bügelgriffs (G) hohl ist, um das benachbarte Ende eines hülsenförmigen Stützkörpers (12) aufzunehmen, der mit dem Führungskörper (30) zur Abstützung des Griffs (G) auf dem Fußflansch (31) verbindbar ist, wozu der Stützkörper (12) einen auskragenden Bund (14) hat, an welchem das Ende (H) des hohlen Griffs (G) und der Fußflansch (31) anliegen, so daß sich der Griff (G) auf dem Führungskörper (30) durch Anlage des Bunds (14) an dem Fußflansch (31) abstützt.

2. Griff nach Anspruch 1, **dadurch gekennzeichnet, daß** mit dem Fußflansch (31) abstützseitig ein Kopf (32) einstückig ist, der ein Außengewinde (36) zur Halterung einer Hutmutter (20) aufweist.

3. Griff nach Anspruch 1 oder 2, **dadurch gekennzeichnet, daß** der Stützkörper (12) die Hutmutter (20) übergreift und selbst von dem hohlen Ende (H) übergriffen wird, mit dem er entweder lösbar oder starr verbindbar ist, z.B. durch Verschweißung.

4. Griff nach einem der Ansprüche 1 bis 3, **dadurch gekennzeichnet, daß** eine Hülse (44) auf einen Schaft (37) aufschraubbar ist, der von dem Fußflansch (31) des Stützkörpers (30) absteht, wobei die Hülse (44) vorzugsweise ein breites Außen-Holzgewinde (45) zur Befestigung an einer aus Holz bestehenden Tür (T), einem Fenster, einer Schublade o.dgl. hat.

5. Griff nach einem der Ansprüche 2 bis 4, **dadurch gekennzeichnet, daß** der Kopf (32) und/oder die Hutmutter (20)in einem Axialabstand zu dem Fußflansch (31) eine V-förmige Umfangsnut (24) aufweist, in die zur Befestigung sowohl des hohlen Endes (H) als auch des Stützkörpers (12) ein Gewindestift (V) radial eingreift, und daß der Kopf (32) und/oder die Hutmutter (20) stützkörperseitig eine Ansenkung (35) sowie Werkzeug-Ansetzflächen hat, beispielsweise Schlüsselflächen (33; 23) vorgegebener Schlüsselweite.

6. Griff nach einem der Ansprüche 1 bis 5, **dadurch gekennzeichnet, daß** auf den Führungskörper (30) ein mit einem Flansch (56) versehener Abstützring (55) aufschraubbar ist.

7. Griff nach Anspruch 6, **dadurch gekennzeichnet, daß** der Führungskörper (30) durch eine Einlaßöffnung (65) eines Mehrkammerprofils (M) einführbar ist, bis der Fußflansch (31) an einem mit der Bohrung (B) versehenen Innenrahmen (I) aufruht, und daß er befestigbar ist, indem der Abstützring (55) bis zur Anlage an dem Mehrkammerprofil (M) aufschraubbar ist, insbesondere an einem äußeren Rohrrahmen (R) nahe der Einlaßöffnung (65).

8. Griff nach einem der Ansprüche 1 bis 7, **dadurch gekennzeichnet, daß** ein Mehrkantstift (47) eine axiale Gewindebohrung (48) zur Verschraubung mit der Schraube (29) aufweist und mit einem Türgriff (50) verbindbar sowie als Sicherungselement in die Gegenbohrung (L) gegenüber der Bohrung (B) der Anschlagfläche (A) bzw. der Einlaßöffnung (65) des Mehrkammerprofils (M) einführbar ist.

9. Griff nach einem der Ansprüche 6 bis 8, **dadurch gekennzeichnet, daß** der Türgriff (50) durch Formschluß mit dem Mehrkantstift (47) an einem Rohrrahmen (R) axialfest montierbar, jedoch in einer benachbarten Anschlagplatte (66) drehbar ist.

10. Griff nach Anspruch 8 oder 9, **dadurch gekennzeichnet, daß** der durch die Schraube (29) 'gesicherte Mehrkantstift (47) einen Teil eines Schlosses durchsetzt, das in eine Schloßtasche (S) der Tür (T) einfügbar ist.

11. Montagemittel zum Anbringen der hohlen Enden (H) eines Bügelgriffs (G) an einer mit einer Öffnung (65; B) versehenen Anschlagfläche (A), bestehend aus einem Führungskörper (30) und einem Sicherungselement (47), wobei der Führungskörper (30) einen Fußflansch (31) hat und mit dem Sicherungselement (47) durch eine im Gebrauchszustand die Öffnung (65; B) durchsetzende Schraube (29) verbindbar ist, und ferner bestehend aus einem hülsenförmigen Stützkörper (12), der auf dem Führungskörper (30) montierbar ist und einen in der Hülsenwand eine Stufe bildenden Bund (14) aufweist, woran der Fußflansch (31) im montierten Zustand anliegt, **dadurch gekennzeichnet, daß** zwischen dem Führungskörper (30) und dem Stützkörper (12) eine Hutmutter (20) angeordnet ist, die im Gebrauchszustand übergreifend dazwischen sitzt, wobei die Hutmutter (20) und ein Kopf (12) des Führungskörpers (30) jeweils Gewinde zur Verbindung miteinander und Schlüsselflächen (23; 33) zum Zusammenschrauben haben, und wobei die Hutmutter (20) außerdem eine Umfangsnut (24) aufweist, an welcher der Griff (G) im Gebrauchszustand mittels eines Gewindestifts (V) am zugeordneten hohlen Ende (H) befestigbar ist.

12. Montagemittel nach Anspruch 11, **dadurch gekennzeichnet, daß** für die Befestigung eines Türgriffs (50) z.B. an einem Mehrkammerprofil (M) der Führungskörper (30) im Gebrauchszustand außen durch einen Flanschring (55) gesichert ist, wobei als Verbindungsglied ein in dem Türgriff (50) unverdrehbar gehaltener Mehrkantstift (47) vorhanden ist.

## Revendications

1. Poignée courbée comprenant des moyens de support (10) pour fixer au moins une extrémité (H) de la poignée (G) de manière à ce qu'elle s'étende depuis une surface de contact (A) d'une porte (T), d'une fenêtre, d'un tiroir ou autres vers l'extérieur, les moyens de support de la poignée comprenant un élément de fixation (29) avec une tête et une tige filetée, et comprenant aussi un corps de base (30) et un corps de blocage (47), le corps de base (30) ayant un trou de passage central (34) pour le passage de la tige filetée de l'élément de fixation (29) et ayant une bride de base (31), ce par quoi pendant l'usage, la bride de base (31) montée s'appuye sur la surface de contact correspondante (A), alors que la tige filetée s'étend du trou de passage (34) à travers une ouverture (B) dans la surface de contact (A) de manière à être assemblée par filet au corps de blocage (47), une partie correspondante du corps de blocage (47) ayant été introduite depuis l'autre côté de la porte (T), de la fenêtre, du tiroir ou autres, à travers une ouverture opposée (L), bloquant ainsi le corps de base (30) sur la surface de contact (A), de manière à ce que la poignée courbée (G) puisse alors y être montée par connexion au corps de base (30), **caractérisée en ce qu'**au moins une extrémité de la poignée courbée (G) est creuse de manière à y recevoir l'extrémité voisine d'un corps de support tubulaire (12), ce corps de support tubulaire (12) pouvant être connecté au corps de base (30) afin d'appuyer la poignée (G) sur la bride de base (31), ce pour quoi le corps de support tubulaire (12) a un collet (14) s'étendant vers l'extérieur, s'adossant à l'extrémité (H) de la poignée creuse (G) et recevant la bride de base (31), la poignée (G) ayant ainsi appui sur le corps de base (30) par adossement du collet (14) contre la bride de base (31).

2. Poignée selon la revendication 1, **caractérisée en ce qu'**une tête (32) est connectée intégralement à la bride de base (31) sur le côté de support du corps et comporte un filet extérieur (36) pour tenir un écrou borgne (20).

3. Poignée selon l'une des revendications 1 à 2, **caractérisée en ce que** le corps de support (12) chevauche sur l'écrou borgne (20) et qu'il est lui-même chevauché par l'extrémité creuse (H), à laquelle il peut être assemblé soit amoviblement, soit rigidement par soudage par exemple.

4. Poignée selon l'une des revendications 1 à 3, **caractérisée en ce qu'**un tube (44) est vissable sur un fût (37) qui émerge de la bride de base (31) du corps de base (30), le tube (44) ayant de préférence un large filet extérieur à bois (45) pour uné fixation sur une porte en bois (T), une fenêtre, un tiroir ou autres.

5. Poignée selon l'une des revendications 2 à 4, **caractérisée en ce que** la tête (32) et/ou l'écrou borgne (20) ont, à une distance axiale de la bride de base (31), une gorge périphérique en V (24), dans laquelle une vis sans tête (V) peut être engagagée radialement pour fixer aussi bien l'extrémité creuse (H) que le corps de support (12), et **caractérisée en ce que** la tête (32) et/ou l'écrou borgne (20) ont un renfoncement (35) sur le côté du corps de support et qu'ils ont des surfaces d'application d'outils tels que des méplats parallèles (33 ou 23) correspondant à une ouverture de clé donnée.

6. Poignée selon l'une des revendications 1 à 5, **caractérisée en ce qu'**une bague de support (55) pourvue d'une bride (56) peut être vissée sur le corps de base (30).

7. Poignée selon la revendication 6, **caractérisée en ce que** le corps de base (30) peut être introduit par une ouverture d'entrée (65) dans un profilé multichambre (M) jusqu'à ce que la bride de base (31) repose sur un châssis intérieur (I) pourvu de l'ouverture (B), et fixé en y vissant la bague de support (55) jusqu'à ce qu'elle soit en contact avec le profilé multichambre (M), notamment avec un châssis tubulaire extérieur (R) proche de l'ouverture d'entrée (65).

8. Poignée selon l'une des revendications 1 à 7, **caractérisée en ce qu'**une cheville polygonale (47) dispose d'une ouverture axiale taraudée (48) pour une fixation au moyen de l'élément de fixation (29), et qu'elle est apte à être connectée à une poignée de porte (50) et à être introduite en tant que corps de blocage dans l'ouverture (L) opposée à l'ouverture (B) de la surface de contact (A) ou à l'ouverture d'entrée (65) du profilé multichambre (M).

9. Poignée selon l'une des revendications 6 à 8, **caractérisée en ce que** par connexion solidaire de la cheville polygonale (47) à une poignée de porte (50), cette dernière peut être fixée à un châssis tubulaire (R) d'une manière axialement fixe mais rotative, avec application d'une plaque de contact (66) qui lui est voisine.

10. Poignée selon la revendication 8 ou la revendication 9, **caractérisée en ce que** la cheville polygonale (47) bloquée par l'élément de fixation (29) traverse une partie d'une serrure insérée dans une embrasure de serrure (S) de la porte (T).

11. Moyens de support pour le montage des extrémités creuses (H) d'une poignée courbée (G) sur une surface de contact (A) ayant une ouverture (65; B), consistant en un corps de base (30) et en un corps de blocage (47), le corps de base (30) disposant d'une bride de base (31) et étant connectable à un corps de blocage (47) par une vis (29) traversant l'ouverture (65; B) pendant l'usage, ainsi qu'en un corps tubulaire de support (12) adapté pour un montage sur le corps de base (30) et ayant un collet (14) formant un gradin extérieur dans la paroi tubulaire, si bien que lorsqu'elle a été montée pour usage, la bride de base (31) y est reçue pour s'adosser à ce collet (14), **caractérisés en ce que** l'écrou borgne (20), pendant l'usage, est assis à cheval entre le corps de base (30) et le corps tubulaire de support (12), l'écrou borgne (20) et une tête (32) du corps de base (30) étant taraudés pour mise en prise mutuelle et ayant des méplats de clé (23; 33) pour les visser l'un sur l'autre, et l'écrou borgne (20) disposant aussi d'une gorge périphérique (24) permettant à la poignée (G) d'être fixée, pour l'usage, au moyen d'une vis sans tête (V) à l'extrémité creuse correspondante (H).

12. Moyens de support selon la revendication 11, **caractérisés en ce que** pendant l'usage, le corps de base (30) est bloqué extérieurement par une bague à bride (55) pour fixer une poignée de porte (50) à un profilé multichambre (M) par exemple, le corps de blocage étant une cheville polygonale (47) tenue de manière non-rotative dans la poignée de porte (50).
